(19) Europäisches Patentamt / European Patent Office / Office européen des brevets

(11) **EP 4 624 665 A1**

(12) **EUROPEAN PATENT APPLICATION**
published in accordance with Art. 153(4) EPC

(43) Date of publication:
01.10.2025 Bulletin 2025/40

(21) Application number: 23897778.9

(22) Date of filing: 28.11.2023

(51) International Patent Classification (IPC):
*E01C 23/00* (2006.01)  *E01C 19/10* (2006.01)

(52) Cooperative Patent Classification (CPC):
E01C 19/10; E01C 23/00

(86) International application number:
PCT/JP2023/042561

(87) International publication number:
WO 2024/117130 (06.06.2024 Gazette 2024/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.11.2022 JP 2022189271

(71) Applicant: Nichireki Group Co., Ltd.
Tokyo 102-8222 (JP)

(72) Inventors:
• TAKEBAYASHI, Hiroki
Machida-shi, Tokyo 194-8508 (JP)

• IITAKA, Hiroyuki
Shimotsuke-shi, Tochigi 329-0412 (JP)
• BANBA, Koki
Shimotsuke-shi, Tochigi 329-0412 (JP)
• HIRAOKA, Tomio
Shimotsuke-shi, Tochigi 329-0412 (JP)
• YAMAMOTO, Takahiro
Tokyo 102-8222 (JP)
• TAKAUCHI, Dai
Shimotsuke-shi, Tochigi 329-0412 (JP)

(74) Representative: Page White Farrer
Bedford House
21a John Street
London WC1N 2BF (GB)

(54) **CONSTRUCTION METHOD FOR RENEWING PAVEMENT LAYER AND RENEWED PAVEMENT LAYER OBTAINED THEREBY**

(57) The present invention aims to provide a recycling construction method for a pavement layer that enables construction of a recycled pavement layer even when an existing pavement to be recycled appears to have excessive moisture by ensuring sufficient compaction and mobility of heavy construction equipment; and a recycled pavement layer obtained by the method. The present invention attains the above object by providing a recycling construction method for a pavement layer comprising a step of adding a water absorbing material to a recycled aggregate such that an apparent moisture content of the recycled aggregate matches a target moisture content, when a moisture content of the recycled aggregate exceeds the target moisture content, wherein the apparent moisture content is obtained by excluding the mass of moisture absorbed by the water-absorbing material; and a pavement layer obtained by the method.

## Description

### Technical Field

The present invention relates to a recycling construction method for a pavement layer and a recycled pavement layer obtained by the method.

### Background art

The method for constructing a recycled base course layer by excavating and crushing the existing base course of deteriorated asphalt pavement together with the overlying asphalt mixture layer, mixing the crushed material *in situ* with additives such as asphalt emulsion, foamed asphalt, and/or cement, and then spreading and compacting the mixture, is a conventional technique as exemplified by Patent Literatures 1 and 2.

Because the above method reuses most of the existing pavement *in situ*, it is advantageous in that it reduces the amount of material transportation to and from the construction site, improves energy efficiency, enables effective utilization of resources, and contributes to the reduction of $CO_2$ emissions. In addition, the method is also advantageous in that it is more cost-effective compared to replacing pavement.

However, as the above method reuses most of the existing pavement in *situ*, it has the drawback that the constructability and the physical properties of the recycled base course layer are significantly affected by the condition of the existing pavement at the time of construction.

For example, if it rains just before construction, the existing pavement may contain a relatively high amount of moisture. If the existing pavement is excavated and crushed in this condition, the resulting crushed material will also contain a relatively high amount of moisture. Therefore, if this crushed material is used as recycled aggregate and mixed with additives such as asphalt emulsion or cement, it is expected that the moisture content of the resulting mixture will considerably exceed the optimum moisture content.

Herein, the optimum moisture content refers to the moisture content at which the dry density of the mixture after compaction is maximized. When the moisture content of the mixture exceeds the optimum moisture content, it becomes difficult to compact the mixture to a sufficiently high density, making it hard to construct a recycled base course layer or recycled surface course layer with the desired strength. Furthermore, if the moisture content of the mixture is too high, the fluidity of the mixture increases. This makes it difficult for heavy construction equipment such as stabilizers and road rollers to run over the mixture, resulting in the drawback of being unable to perform construction with heavy construction equipment.

If the existing pavement is in a dry state and its moisture content is low, the issue can be relatively easily addressed by adjusting the moisture content through sprinkling water or using other methods. On the contrary, if the existing pavement contains a high amount of moisture and the moisture content of the mixture of the crushed material and asphalt emulsion, cement, and the like, exceeds the optimum moisture content, it is generally difficult to reduce the moisture content of the existing pavement or the recycled aggregate (i.e., the crushed material of the existing pavement). Examples of measures for reducing the moisture content of the existing pavement or its crushed material include delaying the construction date and waiting for the moisture content of the existing pavement to naturally decrease, removing base course materials that contains a high amount of moisture and replacing them with dry base course materials, or mixing the crushed base course materials with a stabilizer and aerating them. However, all of these measures require a great deal of labor and time, and a substantial decrease in construction efficiency is inevitable.

### Citation List

### Patent Literature

[Patent Literature 1] Japanese Patent Application Publication No. 2000-314105
[Patent Literature 2] Japanese Patent Application Publication No. 2002-69922

### Summary of Invention

### Technical Problem

The present invention has been made to solve the problems of the above-described conventional recycling construction method for a pavement layer, and aims to provide a recycling construction method for a pavement layer that enables construction of a recycled pavement layer even when an existing pavement to be recycled appears to have excessive moisture by ensuring sufficient compaction and mobility of heavy construction equipment; and a recycled pavement layer obtained by the method.

**Solution to Problem**

After various studies, the present inventors conceived that the main reason why it is generally difficult to adjust the moisture content of an existing pavement or its crushed product (i.e., recycled aggregate) to a lower level is that conventional approaches focus solely on removing moisture contained in the existing pavement or its crushed product (i.e., recycled aggregate) to the outside of the system by drying or other methods. By radically departing from the conventional approach, the present inventors explored a method that achieves the compaction and construction property equivalent to those achieved when the moisture content is reduced, while retaining the moisture contained in the existing pavement or its crushed product (i.e., the recycled aggregate). As a result, the present inventors unexpectedly found that, by adding a water-absorbing material in an amount sufficient to absorb the excess moisture, it is possible to construct a recycled pavement layer having the desired physical properties and constructability equivalent to those achieved when using recycled aggregates with an appropriate moisture content, without removing the moisture from the existing pavement or its crushed product (i.e., the recycled aggregate) to the outside of the system.

The present invention attains the above object by providing a recycling construction method for a pavement layer in which a part of an existing pavement is used as a recycled aggregate, the method comprising a step of adding a water-absorbing material to the recycled aggregate such that an apparent moisture content of the recycled aggregate matches a target moisture content when a moisture content of the recycled aggregate exceeds the target moisture content, wherein the apparent moisture content is obtained by excluding the mass of moisture absorbed by the water-absorbing material from the mass of moisture contained in the recycled aggregate; and by providing a recycled pavement layer obtained by the method.

In the recycling construction method for a pavement layer according to the present invention, the water-absorbing material is added instead of removing the excess moisture from the system by drying the recycled aggregate or other methods, when the moisture content of the recycled aggregate to be used exceeds the target moisture content. By making the apparent moisture content of the recycled aggregate, obtained by excluding the mass of moisture absorbed by the water-absorbing material, match the target moisture content, the method achieves the same level of constructability as when the moisture content of the recycled aggregate to be used is at the target moisture content, despite retaining the excess moisture within the system.

In a preferred embodiment, the target moisture content refers to the moisture content of the recycled aggregate at which the moisture content of a mixture matches the optimum moisture content, when the mixture is prepared by mixing an aggregate containing the recycled aggregate at least in part with additives such as asphalt emulsion, cement, and the like in the designed proportions. **In** another preferred embodiment, the target moisture content may be the moisture content of a recycled aggregate at which a mixture can be compacted to a sufficient degree of compaction by rolling compaction, when the mixture is prepared by mixing an aggregate containing the recycled aggregate at least in part with additives such as asphalt emulsion, cement, and the like in the designed proportions. In either case, the recycled aggregate only needs to be included as at least a part of the aggregate to be used. But, the entire amount of the aggregate to be used may be the recycled aggregate.

Generally, the optimum moisture content of a mixture obtained by mixing various materials in the designed proportions matches the moisture content of a mixture at which the mixture obtained by mixing various materials in the designed proportions can be compacted to a sufficient degree of compaction by rolling compaction. However, if they are different, the latter moisture content may be preferably used as the target moisture content. The target moisture content may be provided as a numerical range.

In a preferred embodiment, the recycling construction method for a pavement layer according to the present invention may comprise a step of rolling compaction. When the recycling construction method according to the present invention comprises a step of rolling compaction, there is an advantage that a recycled pavement layer with the desired physical properties may be efficiently constructed using heavy equipment such as a road roller.

As the water-absorbing material, a granular inorganic material with a water absorption property, an organic material with a water absorption property, or both of them may be used. In a preferred embodiment, the granular inorganic material with a water absorption property may be a porous ceramic. For example, one or more granular material selected from calcined diatomaceous earth ceramics, zeolites, mesalite, perlite, lightweight foam glass material, calcined fly ash, and the like may be used.

In another preferred embodiment, the organic material with a water absorption property may be a synthetic polymer or natural polymer with a water-absorbing property. Examples of such synthetic polymers include but are not limited to polyacrylate-based, polysulfonate-based, maleic anhydride-based, polyacrylamide-based, polyvinyl alcohol-based, polyethylene oxide-based, and polyamine-based synthetic polymers. Meanwhile, examples of such natural polymers include but are not limited to polyaspartate-based, polyglutamate-based, polyalginate-based, starch-based, cellulose-based, and polyglycol-based natural polymers. These organic materials may be used individually, or two or more of them may be mixed together for use.

In the first aspect, the present invention provides the above-described recycling construction method for a pavement layer. This method may be understood as adjusting the apparent moisture content of an aggregate to be used to a preferable level by adding a water-absorbing agent. Accordingly, in another aspect, the present invention also provides a method for improving a moisture-content-dependent property of an aggregate, comprising mixing an aggregate and a water-absorbing material and thereby reducing an apparent moisture content of the aggregate, wherein the apparent moisture content is obtained by excluding the mass of moisture absorbed by the water-absorbing material.

**Effects of Invention**

According to the recycling construction method for a pavement layer of the present invention, even when the moisture content of a recycled aggregate to be used exceeds the target moisture content, the same level of constructability as when the recycled aggregate is at the target moisture content can be achieved, without removing the excess moisture from the system. This provides the advantage that a recycled pavement layer can be efficiently constructed. Furthermore, according to the method for improving a moisture-content-dependent property of an aggregate of the present invention, it can be possible to improve the moisture-content-dependent property of the aggregates without expending effort on removing excess moisture from the system. This provides the advantage that construction efficiency can be improved in various constructions where aggregates are used.

**Description of Embodiments**

Hereinafter, the present invention will be described in detail, primarily using an on-site base course recycling construction method as an example. However, it is needless to say that the recycling construction method for a pavement layer according to the present invention is not limited to on-site base course recycling construction methods.

1. Recycling Construction Method for Pavement Layer

Representative examples of recycling construction methods for a pavement layer include on-site base course recycling construction methods, in which the base course of the existing pavement is recycled on site. In on-site base course recycling construction methods, the existing pavement is excavated to a depth that includes at least a part of the base course layer and then crushed. The resulting crushed material is used as recycled aggregates, which are mixed with additives such as asphalt emulsions, foamed asphalt, cement, and the like to obtain a mixture. The mixture is then spread and compacted to form a recycled base course layer.

When the recycling construction method for a pavement layer according to the present invention is carried out as an on-site base course recycling construction method, its overall work and process are essentially the same as those of conventional on-site base course recycling construction methods. A step of excavating and crushing the existing pavement and a step of mixing the crushed material with an additive may be carried out using any appropriate tools or equipment. However, these steps are typically carried out using in-place-mixing type stabilizers or road stabilizers.

It is sufficient if the existing pavement is excavated and crushed to the depth at which at least a part of the base course layer is excavated and crushed. For example, it may be sufficient if it is excavated and crushed to the depth which covers the thickness of the base course layer that is intended to be stabilized and reconstructed as a recycled base course layer. If the additional work is not a concern, a part or all of the cement in an amount required per unit area may be spread over the construction surface prior to the excavation and crushing of the existing pavement, followed by the excavation and crushing of the existing pavement together with the cement spread over the construction surface.

Next, the crushed material obtained by excavation and crushing is used as a recycled aggregate, and an asphalt emulsion and a cement are mixed with it. Instead of the asphalt emulsion, foamed asphalt may be mixed. This mixing is carried out at the site where the existing base course layer is excavated and crushed. The aforementioned road stabilizer is equipped with a function of ejecting and spraying asphalt emulsion and other additives, in addition to functions of excavation and crushing. By utilizing this function, it is possible to mix the crushed material with the asphalt emulsion by continuing the excavation and crushing while spraying the asphalt emulsion onto the crushed material.

As mentioned above, the cement may be mixed with the recycled aggregate, by spreading a part or all of the required amount of cement per unit area onto the construction surface of the existing pavement in advance and then excavating and crushing the existing pavement. Alternatively, the cement may be mixed with the crushed material, by spreading it onto the crushed material simultaneously with and/or immediately before or after spraying the asphalt emulsion onto the crushed material. It may be also possible to combine these two spreading and mixing methods. However, it may be preferable to mix the asphalt emulsion and the cement with the crushed material, by mixing the asphalt emulsion and the cement in advance at a predetermined ratio, and then spraying them together onto the crushed material from the nozzle used for ejecting and spraying the asphalt emulsion, as this is the simplest approach in terms of operation.

Any type of asphalt may be contained in the asphalt emulsion that is to be added and mixed. For example, straight asphalt, blown asphalt, semi-blown asphalt, natural asphalt, solvent-refined asphalt, and the like may be used. Modified asphalt with these asphalts mixed with styrene-butadiene block copolymer (SBS), styrene-isoprene block copolymer (SIS), styrene-butadiene random copolymer (SBR), ethylene-vinyl acetate copolymer (EVA), ethylene-ethyl acrylate copolymer (EEA), polystyrene-polyethylene butylene block copolymer (SEBS), natural rubber (NR), chloroprene rubber (CR), isoprene rubber (IR), petroleum resins, oils, and the like may be also used. Examples of oils that may be used include aromatic hydrocarbons, fatty acid-based hydrocarbons, and the like. Example of resins that may be used include C9, terpene phenols, and the like. Furthermore, rubber latex, synthetic polymer emulsions, and water-soluble polymers, either individually or as a mixture of multiple components, may be added to emulsifiers or added after production of emulsions as modifiers.

An emulsifier used for emulsifying an asphalt emulsion may be any of cationic, nonionic, or anionic emulsifiers. Among them, nonionic asphalt emulsions, which use nonionic surfactants as emulsifiers, may be preferred particularly when good compatibility with the crushed base course material is required. Meanwhile, when early strength development is desired, the use of cationic asphalt emulsions, which use cationic surfactants as emulsifiers, may be recommended.

Any type of cement may be also used. For example, various types of Portland cement such as normal Portland cement, high-early-strength Portland cement, ultra-high-early-strength Portland cement, moderate heat Portland cement, and low heat Portland cement may be used, as well as other types of cements such as blast furnace slag cement, silica cement, fly ash cement, jet cement, and alumina cement. Among them, ultra-high-early strength Portland cement or early-strength Portland cement may be preferably used from the viewpoint of early strength development, when shortening of construction time is required. Meanwhile, when cracking accompanying hardening is a concern, the use of moderate heat Portland cement, low heat Portland cement, or the like, may be recommended. Slaked lime or quicklime may be also used instead of cement.

The crack resistance of the recycled base course layer to be constructed may be improved, by further mixing a fiber into the crushed material, in addition to the above-mentioned asphalt emulsion and cement. Examples of fibers to be mixed include but are not limited to mineral fibers such as basalt fiber; inorganic fibers such as glass fiber and steel fiber; and organic fibers such as carbon fiber, vinylon, and cellulose. The size of fibers to be mixed may be preferably in the range of 5 to 100 $\mu$m in diameter and 5 to 40 mm in fiber length. The fiber material may be preferably mixed in an amount of 0.1% to 5.0% by mass of the crushed material.

2. Recycled Aggregate and Moisture Content

In addition to the above step that is conventionally performed, the recycling construction method for a pavement layer according to the present invention comprises, a step of adding a water-absorbing material to the recycled aggregate such that an apparent moisture content of the recycled aggregate matches a target moisture content, when a moisture content of the recycled aggregate exceeds the target moisture content, wherein the apparent moisture content is obtained by excluding the mass of moisture absorbed by the water-absorbing material.

The moisture content of a recycled aggregate refers to the ratio (expressed in percentage) of the mass of the water contained in the recycled aggregate to the dry mass of the recycled aggregate, and is calculated by the following formula (1).

$$R_w = (W_w / W_s) \times 100 \ [\%] \qquad (1)$$

In formula (1), $R_w$ represents the moisture content (%); $W_w$ represents the mass of water contained in the recycled aggregate; and $W_s$ represents the dry mass of the recycled aggregate.

The moisture content of the recycled aggregate can be determined by partially excavating and crushing the existing pavement to be processed in advance, sampling the resulting crushed material, measuring the mass of water contained in the crushed material and the dry mass of the same, and calculating the moisture content based on the measurement values using formula (1).

3. Target Moisture Content

In a preferred embodiment, the target moisture content may be the moisture content of a recycled aggregate at which the moisture content of a mixture matches the optimum moisture content, when the mixture is obtained by mixing an aggregate containing the recycled aggregate at least in part with additives such as asphalt emulsion, cement, and the like in the designed proportions. The designed proportion of a recycled aggregate and additives such as asphalt emulsion, cement and the like is usually determined in advance based on the types of additives such as asphalt emulsion, cement, and the like that are to be used as well as the strength and other properties required for the recycled pavement layer that is to be constructed. The target moisture content is the moisture content of a recycled aggregate at which the moisture content of a mixture matches the optimum moisture content, when the mixture is prepared by using the predetermined type of additives and mixing them with the recycled aggregate at the designed proportions. When not only a recycle aggregate but also a new aggregate is used as aggregates, the target moisture content of the recycled aggregate is determined taking into account the moisture content and the proportions of the new aggregate that is going to be used.

The optimum water content is the water content at which a dry density after compaction gets maximized, as described in JIS A1210 "Test method for soil compaction using a rammer" as follows: "Measured values are plotted taking a dry density on the y-axis and the water content on the x-axis, and then the plots are connected with a smooth curve to obtain the dry density-water content curve. A maximum value of the dry density in this curve is regarded as the maximum dry density $\rho_{dmax}$ (g/cm$^3$), and a water content corresponding to the maximum dry density is regarded as the optimum water content $W_{opt}$ (%)."

Therefore, when the moisture content of the recycled aggregate matches the target moisture content, the moisture content of the mixture prepared using the recycled aggregate in the designed proportions will match the optimum moisture content. When this mixture is compacted by a roller and the like, the maximum compaction density can be achieved. Additionally, the recycled base course layer that is constructed is expected to develop the desired level of strength. The method to obtain the optimum moisture content is explained in detail, for examples on pages 1 to 4 of "ROJO SAISEI SEMENTO ASUFARUTONYUZAI ANTEISHORI HAIGOUSEKKEI NO TEBIKI (Guidelines for Mixture Design of In-Place Recycling with Cement-Asphalt Emulsion Stabilization" (2003, Japan Emulsified Asphalt Association).

Since the optimum moisture content is determined as the moisture content that results in the maximum dry density on the dry density-moisture content curve, it is generally a single-point value. Therefore, when the target moisture content of the recycled aggregate is the moisture content of the recycled aggregate at which the moisture content of the mixture matches the optimum moisture content, the target moisture content is also a single-point value. However, each of the multiple mixtures used as test specimens for determining the optimum moisture content has its own moisture content. Therefore, the optimum moisture content may be set as a numerical range based on the moisture contents of the top two mixtures that showed relatively high compaction densities, for example, by using the moisture content of one mixture as the upper limit and the moisture content of another mixture as the lower limit. In such a case, the target moisture content will be also set as a numerical range.

In another preferred embodiment, the target moisture content may be the moisture content of a recycled aggregate at which a mixture can be compacted to a sufficient degree of compaction by rolling compaction, when the mixture is prepared by mixing an aggregate containing the recycled aggregate at least in part with additives such as asphalt emulsion, cement, and the like in the designed proportions.

Whether the obtained mixture can be compacted to a sufficient degree of compaction by rolling compaction or not can be judged based on the degree of compaction and fluidity of the mixture. The degree of compaction of the mixture can be determined in accordance with the method described in "TENASTU CONCRETE HOSOU GIJUTSU SHISHIN (AN) (Draft Technical Guidelines for Roller-Compacted Concrete Pavement" (Japan Road Association, October 1990, Pages 76 to 77, "HUROKU 3 MARSHALL TSUKIKATAME SHIKENHOUHOU (Appendix 3 Marshall Compaction Test Method"). Generally speaking, the mixture with a degree of compaction of 96.0% or higher is considered to be a mixture that can be sufficiently compacted.

Meanwhile, the fluidity of the mixture may be determined, for example, based on the slump value. In other words, when the slump value of the mixture is measured and the value is equal to or below a certain threshold, it can be judged that the mixture has low fluidity and heavy equipment such as road rollers can run over the mixture. In the later-described experimental examples, it is judged that the mixture has sufficiently low fluidity and can be compacted by rolling compaction when the slump value is 0 cm. However, this standard value of the slump (i.e., 0 cm) is not an absolute standard. It may be appropriately changed depending on factors such as the composition of the mixture for constructing the recycled pavement layer and/or the conditions at the construction site. The method for measuring the slump value is described in JIS A 1101 "Method of test for slump of concrete."

As described above, when the recycled aggregate is mixed with additives such as an asphalt emulsion and a cement at the designed proportion to prepare a mixture, the degree of compaction and the slump value of the mixture are measured, and the degree of compaction is equal to or above a certain threshold and the slump value is equal to or below a certain threshold, then it can be judged that the mixture can be suitably and sufficiently compacted using heavy equipment for rolling compaction. The moisture content of the recycled aggregate that enables such a mixture to be obtained may be set as the target moisture content.

The moisture content of the recycled aggregate that gives a mixture exhibiting the degree of compaction equal to or above a certain threshold and the slump value equal to or below a certain threshold may be a single point value or may be defined as a numerical range. Therefore, when the target moisture content is set as the moisture content of the recycled aggregate that enables preparation of the mixture that can be suitably and sufficiently compacted by rolling compaction, the target moisture content may be set as either a single point value or a numerical range.

Either the target moisture content determined based on the optimum moisture content of the mixture, or the target moisture content determined based on whether the mixture can be sufficiently compacted by rolling compaction or not, may be used. However, the latter may be more preferable, because it allows for flexible adaptation to the conditions of the construction site, the composition of the mixture, and the like, by changing the standard values for the degree of compaction and the slump value.

4. Water-absorbing material

In the recycling construction method for a pavement layer according to the present invention, a water-absorbing material is mixed with the recycled aggregate, when the moisture content of the recycled aggregate to be used exceeds the target moisture content. On the other hand, when the moisture content of the recycled aggregate to be used is below the target moisture content, the moisture content of the recycled aggregate may be increased, for example, by sprinkling water onto the existing pavement to be processed.

Any material capable of absorbing moisture may be used as the water-absorbing material to be mixed, and either or both of inorganic and organic water-absorbing materials may be used. As the inorganic water-absorbing material, porous ceramics may be preferable. Examples of porous ceramics include calcined diatomaceous earth ceramics, zeolites, mesalite, perlite, lightweight foam glass materials, calcined fly ash, and the like. Among them calcined diatomaceous earth ceramics and zeolites are preferred, and calcined diatomaceous earth ceramics are more preferred. These inorganic water-absorbing materials may be used also in combination of two or more kinds. It is also preferable that these inorganic water-absorbing materials are in granular form. Although inorganic water-absorbing materials with any water absorption rate may be used, materials with too low water absorption rate may not be preferred because use of these materials increase the amount to be used. Generally, a water absorption rate of 20% by mass or more may be preferable, and a water absorption rate of 40% by mass or more may be more preferable.

On the other hand, as the organic water-absorbing material, synthetic or natural polymers with water-absorbing properties may be used. Examples of synthetic polymers include polyacrylate-based, polysulfonate-based, maleic anhydride-based, polyacrylamide-based, polyvinyl alcohol-based, polyethylene oxide-based, and polyamine-based synthetic polymers. Examples of natural polymers include polyaspartate-based, polyglutamate-based, polyalginate-based, starch-based, cellulose-based, and polyglycol-based natural polymers. Among them, polyacrylate-based synthetic polymers may be preferably used. These polymers may be used alone or also in combination of two or more kinds.

5. Apparent Moisture Content

The above-mentioned water-absorbing material is added in an amount sufficient to make the apparent moisture content of the recycled aggregate match the target moisture content, and is mixed with the recycled aggregate. Herein, the apparent moisture content of the recycled aggregate is calculated by excluding the mass of moisture absorbed by the water-absorbing material.

The apparent moisture content of the recycled aggregate refers to the moisture content of the recycled aggregate calculated by excluding the mass of water absorbed by the water-absorbing material that is mixed with it. When the water-absorbing material is an inorganic material, the apparent moisture content of the recycled aggregate is calculated using the following formula (2), in which the mass of the water-absorbing material is counted as a part of the aggregate mass.

$$R_{wf} = \{(W_w - W_a) / (W_s + A)\} \times 100 \ [\%] \qquad (2)$$

In formula (2), $R_{wf}$ represents the apparent moisture content (%); $W_w$ represents the mass of water contained in the recycled aggregate; $W_a$ represents the mass of water absorbed by the water-absorbing material; $W_s$ represents the dry mass of the recycled aggregate; and A represents the mass of the water-absorbing material.

Meanwhile, when the water-absorbing material is an organic material, the apparent moisture content of the recycled aggregate is calculated using the following formula (3), in which the mass of the water-absorbing material is not counted as a part of the aggregate mass.

$$R_{wf} = \{(W_w - W_a) / (W_s)\} \times 100 \ [\%] \qquad (3)$$

The reason why the mass of the water-absorbing material is not counted as a part of the aggregate mass when the water-absorbing material is an organic material is that organic water-absorbing materials generally have extremely high water-absorption capacity and thus the amount of the water-absorbing material to be mixed with the recycled aggregate is usually very small. However, it is also acceptable to obtain the apparent moisture content of the recycled

EP 4 624 665 A1

aggregate by including the mass of the water-absorbing material in the aggregate mass, even when the water-absorbing material is an organic material.

The mass of water absorbed by the water-absorbing material ($W_a$) may be calculated, for example, using the following formula (4).

$$W_a = A \times (a / 100) \qquad (4)$$

In formula (4), A represents the mass of the water-absorbing material, and a represents the water absorption ratio of the water-absorbing material (%).

The water absorption rate of water-absorbing materials can be determined using the method described in "HOSOUCHOUSA SHIKENHOU BINRAN (Pavement Survey and Test Method Handbook)" (2019 Edition, Volume 2) (Japan Road Association, March 2019, Pages 11~13) under section "A002 SAIKOTSUZAI NO MITSUDO OYOBI KYUSUIRITSU SHIKEN HOUHOU"(A002 Test Method for Density and Water Absorption of Fine Aggregate", or a method in accordance with the method.

The recycling construction method according to the present invention comprises a step of mixing a water-absorbing material with a recycled aggregate such that the apparent moisture content of the recycled aggregate matches the target moisture content, when the moisture content of the recycled aggregate exceeds the target moisture content. Herein, the term "matches" refers to either making the apparent moisture content of the recycled aggregate numerically equal to the target moisture content, or, when the target moisture content is defined as a numerical range, making the apparent moisture content of the recycled aggregate fall within the numerical range. In order to make the apparent moisture content of the recycled aggregate match the target moisture content, the recycled aggregate may be mixed with a sufficient amount of water-absorbing material to make the apparent moisture content ($R_{wf}$, %), calculated using formula (2) or (3), match the target moisture content.

The amount of water-absorbing material sufficient to make the apparent moisture content of the recycled aggregate match the target moisture content can be determined based on the above formula (2) or (3), when the water absorption rate of the water-absorbing material to be used is known. On the other hand, if the water absorption rate of the water-absorbing material to be used is unknown or it requires significant effort to determine the water absorption rate, the amount of water-absorbing material to be mixed with the recycled aggregate may be determined experimentally.

In detail, the amount that makes the apparent moisture content of the recycled aggregate match the target moisture content may be determined by mixing a recycled aggregate and additives such as asphalt emulsion, cement and the like in the designed proportions, adding varying amount of the water-absorbing material to be used therein, measuring the dry density of the resulting mixture, and then taking the added amount of the water-absorbing material that results in the maximum dry density. Alternatively, the amount that makes the apparent moisture content of the recycled aggregate match the target moisture content may be determined by mixing a recycled aggregate and additives such as asphalt emulsion, cement and the like in the designed proportions, adding varying amount of the water-absorbing material to be used therein, measuring the degree of compaction and slump value of the resulting mixture, and then taking the added amount of the water-absorbing material that results in the degree of compaction equal to or above a certain value and the slump value equal to or below a certain value.

By adding the water-absorbing material and thereby making the apparent moisture content match the target moisture content, the same constructability as when using a recycled aggregate having the target moisture content can be surprisingly achieved, even though no moisture is actually removed from the system. In other words, by adding the water absorbing material and making the apparent moisture content match the target moisture content, not only the compaction to a high degree of compaction is enabled, but also the fluidity of the mixture is reduced, allowing heavy construction equipment such as stabilizers and road rollers to run over the mixture. As a result, it becomes possible to mix the mixture and perform adequate compaction by rolling with high construction efficiency, enabling the construction of a recycled base course layer with the desired level of strength.

In the above explanation, the recycling construction method for a pavement layer according to the present invention is described primarily as an on-site base course recycling construction method, which recycles the base course layer *in situ*. However, the pavement layer to be recycled by the recycling construction method according to the present invention is not limited to the base course layer. For example, the surface course layer or the base course layer may be also recycled. Furthermore, in the recycling construction method for a pavement layer according to the present invention, the entire amount of the aggregate used may be the recycled aggregate obtained by crushing existing pavement, or it may contain a new aggregate in addition to the recycled aggregate.

Below, the present invention is described in further detail based on experiment.

<Experiment 1: Determination of Target Moisture Content>

The target moisture content was experimentally determined for a mixture with one possible composition. To determine the target moisture content, whether the mixture could be sufficiently compacted by rolling compaction or not was judged, using the degree of compaction and slump value as indicators. The moisture content of the aggregate at which the mixture was judged to be a mixture that could be sufficiently compacted by rolling compaction was determined as the target moisture content.

The materials used in the experiment and the composition of the mixture are shown in Table 1 below. In this experiment, graded crushed stone, which is commonly used as base course material, was used as the aggregate. However, if possible, an existing pavement at the intended construction site may be excavated and crushed to obtain a crushed material, which may then be used as the aggregate in the experiment.

[Table 1]

| Components | Materials Used | Amount (Parts by Mass) |
|---|---|---|
| Aggregate | Graded Crushed Stone (M-40) (JIS A5001) | 85.0 |
| Cement | Normal Portland Cement (JIS R5210) | 5.8 |
| Asphalt Emulsion | "Assol A" (Nonionic Asphalt Emulsion MN-1 (JIS K2208), Residue by evaporation: 57% by mass) (manufactured by Nichireki Co., Ltd.) | 9.2 |
| Total | | 100.0 |

Five types of aggregates with varying moisture contents of 1% by mass, 2% by mass, 3% by mass, 4% by mass, and 5% by mass were prepared. Each of the five types of aggregates was mixed with cement and asphalt emulsion at the proportion shown in Table 1 above, to prepare five types of mixtures having different moisture contents of the aggregate. Using the thus prepared mixtures, the degrees of compaction and slump values were measured. The results are shown in Table 2.

<Degree of Compaction>

The degree of compaction was measured in accordance with the method described in "TENASTU CONCRETE HOSOU GIJUTSU SHISHIN (AN) (Draft Technical Guidelines for Roller-Compacted Concrete Pavement" (Japan Road Association, October 1990, Pages 76 to 77) under section "HUROKU 3 MARSHALL TSUKIKATAME SHIKENHOUHOU (Appendix 3 Marshall Compaction Test Method"). In detail, the test specimen mixture was filled into the test mold and then compacted by blowing with a Marshall compaction hammer for 50 times. The depth from the top edge of the mold to the top surface of the specimen was measured. The height of the specimen was calculated by subtracting this depth from the total mold depth, and the volume of the specimen (V) was calculated. The density of the specimen ($g/cm^3$) was then obtained by dividing the pre-measured mass of the specimen by this volume. Finally, the degree of compaction (%) was determined by dividing the density of specimen by the theoretical maximum density of the same specimen. The calculation is summarized in formula (5):

$$\text{Degree of Compaction (\%)} = \{[\text{The density of the specimen } (g/cm^3)] / [\text{the theoretical maximum density } (g/cm^3)]\} \times 100 \, [\%] \quad (5) \qquad (5)$$

The theoretical maximum density of the specimen is obtained based on formula (6) below:

$$\text{Theoretical maximum density } (g/cm^3) = (\text{Total mass of each material contained in the specimen } (g)) / (\text{Total volume of each material contained in the specimen } (cm^3)) \quad (6) \qquad (6)$$

When the degree of compaction was 96.0% or higher, the mixture was judged to be a mixture that can be sufficiently compacted.

<Slump Value>

The slum values were measured using the five types of mixtures mentioned above as test samples, based on the test method described in JIS A 1101 "Method of test for slump of concrete." When the slump value was 0 cm, it was judged that heavy construction equipment such as stabilizers and road rollers could run over the mixture.

[Table 2]

| | Mixture | | | | |
|---|---|---|---|---|---|
| | Moisture Content of Aggregate Used | | | | |
| | 1% | 2% | 3% | 4% | 5% |
| Degree of Compaction (%)* | 93.8 | 95.5 | 97.8 | 98.0 | 97.8 |
| Slump Value (cm)** | 0 | 0 | 0 | 8 | 15 |
| Evaluation | △ | △ | ○ | × | × |
| Comments | The slump value is satisfactory, but the degree of compaction is insufficient. | The slump value is satisfactory, but the degree of compaction is insufficient. | Both the degree of compaction and the slump value are satisfactory. | The degree of compaction is sufficient, but the slump value is unsatisfactory. | The degree of compaction is sufficient, but the slump value is unsatisfactory. |
| * : When the degree of compaction is equal to 96.0% or more, it was judged that the mixture can be sufficiently compacted. **: When the slump value is equal to or below 0 cm, it was judged that the mixture can be compacted by rolling compaction. | | | | | |

As shown in Table 2, when mixtures were prepared using aggregates with the moisture content of 2% by mass or 1% by mass, the slump values of the resulting mixtures were 0 cm in both cases, satisfying the standard value. However, the degrees of compaction were 95.5% and 93.8%, respectively, which did not reach the threshold of 96.0% or higher. Therefore, it was judged that when the moisture content of the aggregate is 2% by mass or lower, a mixture that can be sufficiently compacted by rolling compaction cannot be obtained.

On the other hand, when mixtures were prepared using aggregates with the moisture content of 4% by mass or 5% by mass, the resulting mixtures exhibited the high degrees of compaction of 98.0% and 97.8%, respectively, both exceeding the standard value of 96.0% or higher. However, the slump values were as high as 8 cm and 15 cm, indicating high fluidity. It was therefore judged that heavy equipment cannot run over the mixtures. As a result, it was judged that when the moisture content of the aggregate is 4% by mass or higher, it is not possible to obtain a mixture that can be compacted by rolling compaction.

In contrast, when a mixture was prepared using an aggregate with a moisture content of 3% by mass, the resulting mixture exhibited the high degree of compaction of 97.8%, which exceeded the standard value of 96.0%. The slump value was 0 cm, also satisfying the standard value of 0 cm or less. Therefore, it was concluded that when the moisture content of the aggregate is 3% by mass, the resulting mixture allows heavy equipment to run over it and can be sufficiently compacted by rolling compaction. Based on these results, the target moisture content for the mixture with the tested composition was determined to be 3% by mass.

In the above experiment, the moisture content of the aggregate was varied in 1% increments from 1% by mass to 5% by mass, and as a result, it was found that the mixtures did not meet the standards when the moisture content was 2% by mass or less, or 4% by mass or more, whereas a mixture judged to be sufficiently compactible by rolling compaction was obtained when the moisture content was 3% by mass. Based on this result, the target moisture content was determined to be 3% by mass. However, it may be also possible to conduct a similar experiment by varying the moisture content of the aggregate in 0.5% increments from 1% by mass to 5% by mass. If it is found that the mixtures do not meet the standards when the moisture content was 2% by mass or less or 4% by mass or more, but do meet the standards for both degree of compaction and slump value and are judged to be sufficiently compactible by rolling compaction when the moisture content is 2.5%, 3.0%, and 3.5% by mass, then the target moisture content may be determined as a numerical range from 2.5% to 3.5% by mass.

It is expected that the target moisture content varies depending on the composition of the mixture, including the types of materials used. Therefore, the target moisture content of 3% by mass mentioned above is the target moisture content for the mixture having the composition shown in Table 1. It is needless to say that the target moisture content is not limited to 3% by mass or to the numerical range from 2.5% to 3.5% by mass described above.

**EP 4 624 665 A1**

<Experiment 2: Influence of Moisture Content on the Properties of the Mixture>

Using the same materials as in Experiment 1, three types of mixtures (Mixtures 1, 2, and 3) were prepared with the same composition as shown in Table 1, except that the moisture content of the aggregate was varied to 3% by mass, 5% by mass, and 7% by mass, respectively. The degree of compaction and slump value of the resulting Mixtures 1, 2, and 3 were measured. In addition, using each of the three types of mixtures, three specimens were prepared, and their flexural strength was measured by the method described below. The results are shown in Table 3. Table 3 also includes the breakdown of the moisture contained in each mixture.

<Method for Measuring Flexural Strength>

The flexural strength was measured using the third-point loading method in accordance with the method specified in "JIS A 1106: Method of test for flexural strength of concrete." For mixtures with a slump value of 0 cm, the mixture was placed into a mold ($15 \times 15 \times 53$ cm), compacted thoroughly using a vibrating tamper, and cured for 7 days to prepare specimens. On the other hand, for mixtures with a slump value exceeding 0 cm, the mixture was placed into a mold ($15 \times 15 \times 53$ cm), in which an internal vibrator was inserted, and compacted until no large air bubbles emerged from the mixture. The compacted mixture was then cured for 7 days to prepare specimens. Three specimens were prepared for each type of mixture, and the average of the flexural strength values obtained from the flexural strength tests was taken as the flexural strength of the mixture.

[Table 3]

| | | Mixture 1 (Aggregate's Moisture Content: 3.0%) | Mixture 2 (Aggregate's Moisture Content: 5.0%) | Mixture 3 (Aggregate's Moisture Content: 7.0%) |
|---|---|---|---|---|
| Composition | Aggregate | 85.0 (parts by mass) | | |
| | Cement | 5.8 (parts by mass) | | |
| | Asphalt Emulsion | 9.2 (parts by mass) | | |
| | Total | 100 (parts by mass) | | |
| | (Moisture in Aggregate) | (2.55) 85.0 x (3.0/100%) | (4.25) 85.0 x (5.0/100%) | (5.95) 85.0 x (7.0/100%) |
| | (Moisture in Asphalt Emulsion) | (3.96) 9.2 x (100-57)/100% | (3.96) 9.2 x (100-57)/100% | (3.96) 9.2 x (100-57)/100% |
| Degree of Compaction (%) | | 97.8 | 97.6 | 97.9 |
| Slump Value (cm) | | 0 | 15 | 25 |
| Flexural Strength (N/mm$^2$) | | 1.15 | 0.75 | 0.66 |

As shown in Table 3, Mixture 1, which used the aggregate with the moisture content of 3% by mass, the same moisture content as the target moisture content, exhibited the high compaction rate of 97.8%, as shown earlier in Table 2. Additionally, the slump value was 0 cm. These results indicate that heavy equipment could run over the mixture and that the mixture could be sufficiently compacted by rolling compaction using rolling compaction equipment. Furthermore, the specimen prepared by loading, compacting and curing Mixture 1 in the mold demonstrated the high flexural strength of 1.15 (N/mm$^2$).

In contrast, Mixture 2, which used the aggregate with the moisture content of 5% by mass, exceeding the target moisture content of 3%, and Mixture 3, which used the aggregate with an even higher moisture content of 7% by mass, both exhibited the high compaction rate exceeding 96.0%, but their slump values were significantly high at 15 cm and 25 cm, respectively, indicating high fluidity. As a result, it was judged that heavy equipment could not run over Mixtures 2 and 3 and that Mixtures 2 and 3 could not be compacted by rolling compaction using rolling compaction equipment. Furthermore, the flexural strengths of the specimens prepared by loading and curing Mixtures 2 and 3 in the molds were as low as 0.75 (N/mm$^2$) and 0.66 (N/mm$^2$), respectively, both of which were lower than the benchmark value of 1.0 (N/mm$^2$).

As described above, when the moisture content of the aggregate exceeds the target moisture content, the resulting mixture exhibits the high degree of compaction but has the significantly high fluidity, making it unable to be compacted by rolling compaction. Additionally, the flexural strength of the resulting cured product is low. These results indicate that it is difficult to construct a recycled base course layer with the desired strength using these mixtures.

<Experiment 3: Influence of Addition of Water-Absorbing Material on the Properties of the Mixture - Part 1>

Mixtures 1a, 2a, and 3a were prepared in the same manner as in Experiment 2, except that a water-absorbing material in amounts of 0 parts by mass, 2.58 parts by mass, and 5.0 parts by mass, respectively, was added and the aggregate was reduced by the same amount as the added water-absorbing material in the compositions of Mixtures 1, 2 and 3 prepared in Experiment 2.

The water-absorbing material used was as follows:

Water-absorbing material:    Porous ceramics (Trade name "Isolite CG1"; manufactured by Isolite Insulating Products Co., Ltd.; [calcined diatomaceous earth content: 45-75% by mass]; Granular form [diameter: 0.3-2 mm]; Water absorption rate: 61% by mass).

The added amount of water-absorbing material was determined by calculating A (the mass of the water-absorbing material) based on formula (2):

$$R_{wf} = \{(W_w - W_a) / (W_s + A)\} \times 100 \ [\%] \quad\quad (2)$$

A was determined based on formula (2), with $R_{wf}$ (%) (the apparent moisture content) =3% by mass (i.e., the target moisture content); $W_w$ (the mass of moisture contained in the aggregate) = (85.0 - A) x (the moisture content of the aggregate); $W_a$ (the mass of moisture absorbed by the water-absorbing material) = A x (the water absorption rate of the water-absorbing material); and $W_s$ (the dry mass of the aggregate) = 85.0 -a. Since an inorganic material was used as the water-absorbing material in this experiment, the mass of the water-absorbing material (A) was counted as part of the aggregate mass, and it was assumed that the sum of the mass of the water-absorbing material (A) and the dry mass of the aggregate ($W_s$) equals 85.0 parts by mass (i.e., A + $W_s$ = 85.0 parts by mass).

For the thus prepared Mixtures 1a, 2a, and 3a, the degree of compaction and slump value were measured in the same manner as in Experiment 2, and in addition, the flexural strength was measured. The results are shown in Table 4. Herein, the results for Mixture 1a are the same as those for Mixture 1 and were copied from Table 3.

[Table 4]

| | | Mixture 1a (Aggregate's Moisture Content: 3.0%) | Mixture 2a (Aggregate's Moisture Content: 5.0%) | Mixture 3a (Aggregate's Moisture Content: 7.0%) |
|---|---|---|---|---|
| Composition | Aggregate | 85.0 (parts by mass) | 82.42 (parts by mass) | 80.0 (parts by mass) |
| | Water-Absorbing Material | 0 (parts by mass) | 2.58 (parts by mass) | 5.0 (parts by mass) |
| | (Subtotal) | 85.0 (parts by mass) | 85.00 (parts by mass) | 85.0 (parts by mass) |
| | Cement | 5.8 (parts by mass) | 5.8 (parts by mass) | 5.8 (parts by mass) |
| | Asphalt Emulsion | 9.2 (parts by mass) | 9.2 (parts by mass) | 9.2 (parts by mass) |
| | Total | 100 (parts by mass) | 100 (parts by mass) | 100 (parts by mass) |
| | (Moisture in Aggregate: A) | (2.55) 85.0 x (3.0/100%) | (4.12) 82.42 x (5.0/100%) | (5.6) 80.0 x (7.0/100%) |
| | (Moisture absorbed by Water-Absorbing Material: B) | 0 0 x 61/100% | 1.57 2.58 x 61/100% | 3.05 5.00 x 61/100% |
| | (Apparent Moisture in Aggregate: A-B) | (2.55) 2.55 - 0 | (2.55) 4.12 - 1.57 | (2.55) 5.6 - 3.05 |
| | (Apparent Moisture Content of Aggregate) | (3.00) 2.55 / 85.0 x 100% | (3.00) 2.55 / 85.0 x 100% | (3.00) 2.55 / 85.0 x 100% |
| Degree of Compaction (%) | | 97.8 | 97.6 | 97.8 |

(continued)

| | Mixture 1a (Aggregate's Moisture Content: 3.0%) | Mixture 2a (Aggregate's Moisture Content: 5.0%) | Mixture 3a (Aggregate's Moisture Content: 7.0%) |
|---|---|---|---|
| Slump Value (cm) | 0 | 0 | 0 |
| Flexural Strength (N/mm$^2$) | 1.15 | 1.05 | 1.08 |

As shown in Table 4, the moisture content of the aggregate used in Mixture 2a was 5.0% by mass, which exceeds the target moisture content of 3% by mass. However, when the apparent moisture content of the aggregate was adjusted to match the target moisture content of 3% by mass by adding 2.58 parts by mass of the water-absorbing material, the degree of compaction reached 97.6% and the slump value was 0 cm. That is, Mixture 2a is a mixture on which heavy equipment can run and which can be sufficiently compacted using rolling compaction. In addition, the flexural strength was as high as 1.05 N/mm$^2$, indicating excellent properties. These results are significantly better than those of Mixture 2, which used the aggregate with the same moisture content of 5% by mass but did not contain any water-absorbing material. Mixture 2a showed constructability and strength in the cured product that were even comparable to those of Mixture 1a, which used the aggregate with the moisture content matching the target moisture content.

Similarly, the moisture content of the aggregate used in Mixture 3a was 7.0% by mass, which exceeds the target moisture content of 3% by mass. However, when the apparent moisture content was adjusted to match the target value of 3% by mass by adding 5.0 parts by mass of the water-absorbing material, the high degree of compaction of 97.8% was achieved. The slump value was 0 cm. Mixture 3a is a mixture on which heavy equipment can run and which can be sufficiently compacted using rolling compaction. In addition, the flexural strength was as high as 1.08 N/mm$^2$, indicating excellent properties. These results were significantly better than those of Mixture 3, which used the aggregate with the same moisture content of 7% by mass but did not contain any water-absorbing material. Mixture 3a showed constructability and strength in the cured product that were even comparable to those of Mixture 1a, which used the aggregate with the moisture content matching the target moisture content.

As described above, even when the moisture content of the aggregate exceeds the target moisture content, mixtures with compaction properties and constructability that are comparable to those obtained using aggregates with the moisture content equal to the target moisture content can be obtained, by mixing a water-absorbing material and adjusting the apparent moisture content of the aggregate, which is calculated by excluding the mass of water absorbed by the water-absorbing material, to match the target moisture content. Furthermore, the cured product of the mixture exhibited the intended strength.

From the viewpoint of the aggregate, it can be considered that the moisture-dependent properties of the aggregate can be improved by mixing a water-absorbing material and adjusting the apparent moisture content of the aggregate, which is calculated by excluding the mass of water absorbed by the water-absorbing material, to match the target moisture content, when the moisture content of the aggregate exceeds the target moisture content. Therefore, the addition of water-absorbing materials as described above is also useful as a method for improving a moisture-dependent property of an aggregate.

Although the above experiments were not conducted using recycled aggregates obtained by excavating and crushing part of an existing pavement, it is reasonable to conclude that the similar results would be obtained when using recycled aggregates, since the experiment was conducted using graded crushed stone, which is commonly used as base course material, as aggregates.

Incidentally, the composition of the mixture used in this experiment comprises 5.8 parts by mass of cement and 9.2 parts by mass of asphalt emulsion relative to 85 parts by mass of aggregate. Compared with the compositions commonly used in on-site base course recycling construction methods, the proportions of cement and asphalt emulsion relative to the aggregate are high. Such a composition with a high cement content relative to the aggregate is expected to produce a recycled pavement layer with high strength. On the other hand, since the amount of asphalt emulsion is also high, the moisture content of the recycled aggregate obtained by crushing existing pavement will be excessive in many construction sites. Therefore, it is expected that the fluidity of the mixture will be too high to be compacted using equipment such as road rollers, unless the moisture content of the recycled aggregate is reduced. According to the recycling construction method of the present invention, even when the moisture content of the recycled aggregate obtained at the construction site is excessive and exceeds the target moisture content, it is possible to achieve the same level of constructability as when the moisture content of the recycled aggregate meets the target moisture content, by appropriately adding a water-absorbing material. As described above, according to the recycling construction method of the present invention, even with a mixture design in which the proportions of cement and asphalt emulsion relative to the aggregate are relatively high, it is possible to construct a high-strength recycled pavement layer by performing compaction process by rolling compaction, without being affected by the moisture content of the recycled aggregate and without excessive workload.

<Experiment 4: Influence of the Addition of Water-Absorbing Material on the Properties of the Mixture - Part 2>

Mixtures 4a, 5a, and 6a were prepared in the same manner as in Experiment 2, except that the water-absorbing material in amounts of 0 parts by mass, 3.21 parts by mass, and 6.18 parts by mass, respectively, was added and the aggregate was reduced by the same amount as the added water-absorbing material in the compositions of Mixtures 1, 2 and 3 prepared in Experiment 2.

The water-absorbing material used was as follows:

Water-absorbing material: Porous ceramics (Trade name: "Zeofill 1424#", manufactured by Shin Tohoku Chemical Industry Co., Ltd.; [natural zeolite (mordenite-type zeolite)]; Granular form [diameter: 1.0-2.0 mm]; Water absorption rate: 48% by mass).

The added amount of the water-absorbing material was determined by calculating A (the mass of the water-absorbing material) based on formula (2):

$$R_{wf} = \{(W_w - W_a) / (W_s + A)\} \times 100 \, [\%] \quad (2)$$

A was determined based on formula (2), with $R_{wf}$ (%) (the apparent moisture content) =3% by mass (i.e., the target moisture content); $W_w$ (the mass of moisture contained in the aggregate) = (85.0 - A) x (the moisture content of the aggregate); $W_a$ (the mass of moisture absorbed by the water-absorbing material) = A x (the water absorption rate of the water-absorbing material); and $W_s$ (the dry mass of the aggregate) = 85.0 -a. Since the inorganic material was used as the water-absorbing material in this experiment, the mass of the water-absorbing material (A) was counted as a part of the aggregate mass, and it was assumed that the sum of the mass of the water-absorbing material (A) and the dry mass of the aggregate ($W_s$) is 85.0 parts by mass (i.e., A + $W_s$ = 85.0 parts by mass).

For the thus prepared Mixtures 4a, 5a, and 6a, the degree of compaction and slump value were measured in the same manner as in Experiment 2, and in addition, the flexural strength was measured. The results are shown in Table 5. Herein, the results for Mixture 4a are the same as those for Mixture 1 and were copied from Table 3.

[Table 5]

| | | | Mixture 4a (Aggregate's Moisture Content: 3.0%) | Mixture 5a (Aggregate's Moisture Content: 5.0%) | Mixture 6a (Aggregate's Moisture Content: 7.0%) |
|---|---|---|---|---|---|
| Composition | | Aggregate | 85.0 (parts by mass) | 81.79 (parts by mass) | 78.82 (parts by mass) |
| | | Water-Absorbing Material | 0 (parts by mass) | 3.21 (parts by mass) | 6.18 (parts by mass) |
| | | (Subtotal) | 85.0 (parts by mass) | 85.00 (parts by mass) | 85.0 (parts by mass) |
| | | Cement | 5.8 (parts by mass) | 5.8 (parts by mass) | 5.8 (parts by mass) |
| | | Asphalt Emulsion | 9.2 (parts by mass) | 9.2 (parts by mass) | 9.2 (parts by mass) |
| | | Total | 100 (parts by mass) | 100 (parts by mass) | 100 (parts by mass) |
| | | (Moisture in Aggregate: A) | (2.55) 85.0 x (3.0/100%) | (4.09) 81.79 x (5.0/100%) | (5.52) 78.82 x (7.0/100%) |
| | | (Moisture absorbed by Water-Absorbing Material: B) | 0 0 x 48/100% | 1.54 3.21 x 48/100% | 2.97 6.18 x 48/100% |
| | | (Apparent Moisture in Aggregate: A-B) | (2.55) 2.55 - 0 | (2.55) 4.09 - 1.54 | (2.55) 5.52 - 2.97 |
| | | (Apparent Moisture Content of Aggregate) | (3.00) 2.55 / 85.0 x 100% | (3.00) 2.55 / 85.0 x 100% | (3.00) 2.55 / 85.0 x 100% |
| Degree of Compaction (%) | | | 97.8 | 97.5 | 97.6 |
| Slump Value (cm) | | | 0 | 0 | 0 |
| Flexural Strength (N/mm$^2$) | | | 1.15 | 0.95 | 0.80 |

As shown in Table 5, the moisture content of the aggregate used in Mixture 5a was 5.0% by mass, which exceeds the target moisture content of 3% by mass. However, when the apparent moisture content of the aggregate was adjusted to match the target moisture content of 3% by mass by adding 3.21 parts by mass of the water-absorbing material, the degree of compaction reached 97.5% and the slump value was 0 cm. That is, Mixture 5a is a mixture on which heavy equipment can run and which can be sufficiently compacted using rolling compaction. In addition, the flexural strength was relatively high at 1.05 N/mm$^2$, indicating excellent properties. These results are significantly better than those of Mixture 2, which used the aggregate with the same moisture content of 5% by mass but did not contain any water-absorbing material.

Similarly, the moisture content of the aggregate used in Mixture 6a was 7.0% by mass, which exceeds the target moisture content of 3% by mass. However, when the apparent moisture content was adjusted to match the target value of 3% by mass by adding 6.18 parts by mass of the water-absorbing material, the high degree of compaction of 97.6% was achieved. The slump value was 0 cm. Mixture 6a is a mixture on which heavy equipment can run and which can be sufficiently compacted using rolling compaction. In addition, the flexural strength was relatively high at 0.80 N/mm$^2$, indicating excellent properties. These results are significantly better than those of Mixture 3, which used the aggregate with the same moisture content of 7% by mass but did not contain any water-absorbing material.

As described above, even when a porous ceramic used as the water-absorbing material was changed from calcined diatomaceous earth to natural zeolite, the same level of constructability as when the moisture content of the aggregate matches the target moisture content was achieved by adding a sufficient amount of the water-absorbing material to adjust the apparent moisture content of the aggregate to the target moisture content. Furthermore, the strength of the resulting cured product was also excellent.

<Experiment 5: Influence of the Addition of Water-Absorbing Material on the Properties of the Mixture - Part 3>

The water-absorbing material was changed to the organic water-absorbing material described below, and the influence of the addition of the water-absorbing material on the properties of the mixture was investigated.

The water-absorbing material used was as follows:

| Water-absorbing material: | Acrylate-based synthetic polymer (Trade name: "High Moisture Content Mud and Soil Improver MT-2", manufactured by Mori Institute for Environmental Technology; [crosslinked acrylic acid polymer partial sodium salt]; Powder form; Water absorption rate: unknown). |
|---|---|

Since the water absorption rate of the water-absorbing material used was unknown, Mixtures 7a, 7b, 7c, and 7d were prepared with varying the amount of the water-absorbing material to 0, 0.04, 0.08, and 0.12% by mass, respectively, in terms of mass percentage relative to the aggregate in the composition of Mixture 2 (the moisture content of the aggregate: 5% by mass) prepared in Experiment 2. Similarly, Mixtures 8a, 8b, 8c, and 8d were prepared with varying the amount of the water-absorbing material to 0, 0.08, 0.16, and 0.24% by mass, respectively, in terms of mass percentage relative to the aggregate in the composition of Mixture 3 (the moisture content of the aggregate: 7% by mass) prepared in Experiment 2.

For the thus prepared Mixtures 7b to 7d and 8b to 8d, the degree of compaction and slump value were measured in the same manner as in Experiment 2. In addition, the flexural strength was measured. The results are shown in Tables 6 and 7. Since the results for Mixtures 7a and 8a are the same as those for Mixtures 2 and 3, respectively, the properties of Mixtures 7a and 8a were copied from Table 3.

[Table 6]

| | | Mixture (parts by mass) | | | | |
|---|---|---|---|---|---|---|
| | | 1 | 7a | 7b | 7c | 7d |
| | | Aggregate's Moisture Content: 3.0% | Aggregate's Moisture Content: 5.0% | | | |
| Composition | Aggregate | 85.0 | 85.0 | 85.0 | 85.0 | 85.0 |
| | Cement | 5.8 | 5.8 | 5.8 | 5.8 | 5.8 |
| | Asphalt Emulsion | 9.2 | 9.2 | 9.2 | 9.2 | 9.2 |
| | Total | 100 | 100 | 100 | 100 | 100 |
| | Water-Absorbing Material (relative to mass of Aggregate, %) | 0 | 0 | 0.04 | 0.08 | 0.12 |
| Property | Degree of Compaction (%) | 97.8 | 97.6 | 97.7 | 97.8 | 97.2 |
| | Slump Value (cm) | 0 | 15 | 7 | 0 | 0 |
| | Flexural Strength (N/mm$^2$) | 1.15 | 0.75 | 0.77 | 0.75 | 0.79 |

[Table 7]

| | | Mixture (parts by mass) | | | | |
|---|---|---|---|---|---|---|
| | | 1 | 8a | 8b | 8c | 8d |
| | | Aggregate's Moisture Content: 3.0% | Aggregate's Moisture Content: 7.0% | | | |
| Composition | Aggregate | 85.0 | 85.0 | 85.0 | 85.0 | 85.0 |
| | Cement | 5.8 | 5.8 | 5.8 | 5.8 | 5.8 |
| | Asphalt Emulsion | 9.2 | 9.2 | 9.2 | 9.2 | 9.2 |
| | Total | 100 | 100 | 100 | 100 | 100 |
| | Water-Absorbing Material (relative to mass of Aggregate, %) | 0 | 0 | 0.08 | 0.16 | 0.24 |
| Property | Degree of Compaction (%) | 97.8 | 97.9 | 97.7 | 97.3 | 97.0 |
| | Slump Value (cm) | 0 | 25 | 11 | 0 | 0 |
| | Flexural Strength (N/mm$^2$) | 1.15 | 0.66 | 0.71 | 0.69 | 0.66 |

As shown in Table 6, among Mixtures 7a to 7d, which used the aggregate with a moisture content of 5% by mass, Mixtures 7a and 7b, with the amount of water-absorbing material of 0.04% by mass or less, resulted in the large slump values at 15 cm and 7 cm, respectively, although the degree of compaction exceeded 96.0%. This result indicates that these mixtures could not be compacted by rolling compaction. Meanwhile, when the amount of water-absorbing material added was increased to 0.08% by mass (Mixture 7c) or 0.12% by mass (Mixture 7d), the slump value decreased to 0 cm, and a high degree of compaction was maintained.

Based on the above results, it was judged that, when the moisture content of the aggregate used exceeds the target moisture content of 3% by mass and reaches 5% by mass, the amount of the organic water-absorbing material to be added may be preferably 0.08% by mass or more or in the range of at least 0.08 to 0.12% by mass relative to the aggregate mass and this enables the mixture to be sufficiently compacted by rolling compaction. Accordingly, it was found that, when the moisture content of the aggregate used exceeds the target moisture content of 3% by mass and reaches 5% by mass, the amount of 0.08% by mass and preferably in the range of 0.08% to 0.12% by mass relative to the aggregate mass is the amount of the organic water-absorbing material that can adjust the apparent moisture content of the aggregate to match the target moisture content. Incidentally, when the organic water-absorbing material was used, no significant change in flexural strength was observed depending on the added amount.

Similarly, as shown in Table 7, among Mixtures 8a to 8d, which used the aggregate with a moisture content of 7% by mass, Mixtures 8a and 8b, with the amount of water-absorbing material of 0.08% by mass or less, resulted in the large slump values at 25 cm and 11 cm, respectively, although the degree of compaction exceeded 96.0%. This result indicates that these mixtures could not be compacted by rolling compaction. Meanwhile, when the amount of water-absorbing material added was increased to 0.16% by mass (Mixture 8c) or 0.24% by mass (Mixture 8d), the slump value decreased to 0 cm, and a high degree of compaction was maintained.

Based on the above results, it was judged that, when the moisture content of the aggregate used exceeds the target moisture content of 3% by mass and reaches 7% by mass, the amount of the organic water-absorbing material to be added may be preferably 0.16% by mass or more and in the range of at least 0.16 to 0.24% by mass relative to the aggregate mass and this enables the mixture to be sufficiently compacted by rolling compaction. Accordingly, it was found that, when the moisture content of the aggregate used exceeds the target moisture content of 3% by mass and reaches 7% by mass, the amount of 0.12% by mass and preferably in the range of 0.12% to 0.24% by mass relative to the aggregate mass is the amount of the organic water-absorbing material that can adjust the apparent moisture content of the aggregate to match the target moisture content. Incidentally, also when the moisture content of the aggregate is 7% by mass, no significant change in flexural strength was observed depending on the added amount of the organic water-absorbing material.

As described above, even when an organic water-absorbing material is used as the water-absorbing material, it is possible to produce a mixture that can be sufficiently compacted by rolling compaction by adding the water-absorbing material and making the apparent moisture content of the aggregate used match the target moisture content. In cases where the water absorption ratio of the water-absorbing material is unknown, the appropriate amount to be added to enable the apparent moisture content of the aggregate used to match the target moisture content may be determined in advance by preparing specimens with various amounts of the water-absorbing material and measuring their degree of compaction and slump values. Needless to say, if the water absorption ratio is known, the amount of the water-absorbing material to be added can be determined using the above formula (3).

<Experiment 6: Influence of Moisture Content of Aggregate on Constructability of Mixtures with High Cement and Asphalt Emulsion Content>

A further experiment was conducted to examine the influence of the moisture content of the aggregate on the constructability of a mixture with a higher cement and asphalt emulsion contents compared to the compositions in Experiments 1 to 5. The materials used and their mixing proportions are shown in Table 8. In a preliminary test conducted in advance, it was confirmed that the moisture content of the aggregate at which the mixture with the mixing proportions shown in Table 8 could be sufficiently compacted by rolling compaction was 1.5% by mass. Therefore, the target moisture content was set at 1.5% by mass.

[Table 8]

| Components | Materials Used | Amount (Parts by Mass) |
|---|---|---|
| Aggregate | Graded Crushed Stone (M-40) (JIS A5001) | 80.0 |
| Cement | Normal Portland Cement (JIS R5210) | 9.6 |
| Asphalt Emulsion | "Assol N" (High Concentration Nonionic Asphalt Emulsion, Residue by evaporation: 65% by mass) (manufactured by Nichireki Co., Ltd.) | 10.4 |
| Total | | 100.0 |

Four types of aggregates with varying moisture contents of 1.5% by mass, 3% by mass, 5% by mass, and 7% by mass were prepared. Each of the four types of aggregates was mixed with cement and asphalt emulsion according to the mixing proportions shown in Table 8 to prepare four kinds of mixtures, i.e., Mixtures 9, 10, 11, and 12, each using aggregate with a different moisture content. Using the thus prepared Mixtures 9 to 12, the degree of compaction and slump values were measured. The results are shown in Table 9.

[Table 9]

| | | Mixture 9 (Aggregate's Moisture Content: 1.5%) | Mixture 10 (Aggregate's Moisture Content: 3.0%) | Mixture 11 (Aggregate's Moisture Content: 5.0%) | Mixture 12 (Aggregate's Moisture Content: 7.0%) |
|---|---|---|---|---|---|
| Composition | Aggregate | 80.0 (parts by mass) | | | |
| | (Moisture in Aggregate) | (1.2%) 80.0 x 0.015 | (2.4%) 80.0 x 0.03 | (4.0%) 80.0 x 0.05 | (5.6%) 80.0 x 0.07 |
| | Cement | 9.6 (parts by mass) | | | |
| | Asphalt Emulsion | 10.4 (parts by mass) | | | |
| | (Moisture in Asphalt Emulsion) | (3.6%) 10.4 - 10.4 x 0.65 | | | |
| | Total | 100 (parts by mass) | | | |
| Property | Degree of Compaction (%) | 97.7 | 98.0 | 97.7 | 97.6 |
| | Slump Value (cm) | 0 | 15 | 25 | 25 |

As shown in Table 9, Mixture 9, in which the moisture content of the aggregate used is equal to the target moisture content, exhibited a high degree of compaction of 97.7% and a slump value of 0 cm, indicating that it was a mixture that could be sufficiently compacted by rolling compaction.

In contrast, Mixtures 10, 11, and 12, which used aggregates with the high moisture content of 3.0% by mass, 3.5% by mass, or 7% by mass, respectively, exceeding the target moisture content, exhibited high degrees of compaction exceeding 96.0%, but showed the high slump values at 15 cm, 25 cm, and 25 cm, respectively, indicating high fluidity. As a result, it was judged that Mixtures 10, 11, and 12 could not be compacted by rolling compaction using heavy construction equipment, such as road rollers, running on the mixtures.

<Experiment 7: Influence of Addition of Water-Absorbing Material on Properties of Mixtures with High Cement and Asphalt Emulsion Content>

Mixtures 9a, 10a, 11a and 12a were prepared in the same manner as in Experiment 3, except that porous ceramics (trade name "Isolite CG1", manufactured by Isolite Insulating Products Co., Ltd. [calcined diatomaceous earth content: 45-75% by mass], granular form [diameter: 0.3-2 mm], water absorption rate: 61% by mass) used in Experiment 3 were used as the water-absorbing material, and that the water-absorbing material in amounts of 0 parts by mass, 1.8 parts by mass, 4.2 parts by mass, and 6.5 parts by mass, respectively, was added and the aggregate was reduced by the same amount as the added water-absorbing material in the compositions of Mixtures 9, 10, 11 and 12 prepared in Experiment 6.

The above-described added amount of the water-absorbing material was determined by calculating A (the mass of the water-absorbing material) based on formula (2):

$$R_{wf} = \{(W_w - W_a) / (W_s + A)\} \times 100 \, [\%] \qquad (2)$$

A was determined based on formula (2), with $R_{wf}$ (%) (the apparent moisture content) =1.5% by mass (i.e., the target moisture content); $W_w$ (the mass of moisture contained in the aggregate) = (80.0 - A) x (the moisture content of the aggregate); $W_a$ (the mass of moisture absorbed by the water-absorbing material) = A x (the water absorption rate of the water-absorbing material); and $W_s$ (the dry mass of the aggregate) = 80.0 -a. Since the inorganic material was used as the water-absorbing material in this experiment, the mass of the water-absorbing material (A) was counted as a part of the aggregate mass, and it was assumed that the sum of the mass of the water-absorbing material (A) and the dry mass of the aggregate ($W_s$) is 80.0 parts by mass (i.e., A + $W_s$ = 80.0 parts by mass).

For the thus prepared Mixtures 9a, 10a, 11a and 12a, the degree of compaction and slump value were measured in the same manner as in Experiment 2, and in addition, the flexural strength was measured. The results are shown in Table 10. Herein, Mixture 9a is identical to Mixture 9. Therefore, the degree of compaction and the slump value of Mixture 9a were copied from Table 9.

[Table 10]

| Composition | | Mixture 9a (Aggregate's Moisture Content: 1.5%) | Mixture 10a (Aggregate's Moisture Content: 3.0%) | Mixture 11a (Aggregate's Moisture Content: 5.0%) | Mixture 12a (Aggregate's Moisture Content: 7.0%) |
|---|---|---|---|---|---|
| | Aggregate | 80.0 (parts by mass) | 78.2 (parts by mass) | 75.8 (parts by mass) | 73.5 (parts by mass) |
| | Water-Absorbing Material | 0.0 (parts by mass) | 1.8 (parts by mass) | 4.2 (parts by mass) | 6.5 (parts by mass) |
| | (Subtotal) | 80.0 (parts by mass) | | | |
| | Cement | 9.6 (parts by mass) | | | |
| | Asphalt Emulsion | 10.4 (parts by mass) | | | |
| | Total | 100 (parts by mass) | | | |
| | (Moisture in Aggregate: $\alpha$) | (1.2) 80.0 x 0.015 | (2.3) 78.2 x 0.03 | (3.8) 75.8 x 0.05 | (5.2) 73.5 x 0.07 |
| | (Moisture absorbed by Water-Absorbing Material: $\beta$) | (0) | (1.1) 1.8 x 0.61 | (2.6) 4.2 x 0.61 | (4.0) 6.5 x 0.61 |
| | (Apparent Moisture in Aggregate: $\alpha$-$\beta$) | (1.2) 1.2 - 0 | (1.2) 2.3 - 1.1 | (1.2) 3.8 - 2.6 | (1.2) 5.2 - 4.0 |
| | (Apparent Moisture Content of Aggregate) | (1.5) 1.2 / 80.0 x 100% | (1.5) 1.2 / 80.0 x 100% | (1.5) 1.2 / 80.0 x 100% | (1.5) 1.2 / 80.0 x 100% |
| Degree of Compaction (%) | | 97.7 | 97.6 | 97.7 | 97.4 |
| Slump Value (cm) | | 0 | 0 | 0 | 0 |
| Flexural Strength (N/mm$^2$) | | 2.3 | 2.2 | 2.0 | 2.0 |

As shown in Table 10, the moisture content of the aggregate used in Mixture 10a was 3.0% by mass, which exceeds the target moisture content of 1.5% by mass. However, when the apparent moisture content of the aggregate was adjusted to match the target moisture content of 1.5% by mass by adding 1.8 parts by mass of the water-absorbing material, the high degree of compaction of 97.6% was obtained and the slump value was 0 cm. That is, Mixture 10a is a mixture on which heavy equipment can run and which can be sufficiently compacted by rolling compaction. In addition, the flexural strength was relatively high at 2.2 N/mm$^2$, indicating excellent properties.

Similarly, the moisture contents of the aggregates used in Mixtures 11a and 12a were 5.0% by mass and 7.0% by mass, respectively, both of which exceed the target moisture content of 1.5% by mass. However, when the apparent moisture contents of the aggregates were adjusted to match the target moisture content of 1.5% by mass by adding 4.2 parts by mass and 6.5 parts by mass of the water-absorbing material, the high degrees of compaction of 97.7% and 97.4% were achieved for Mixtures 11a and 12a, respectively. The slump values were 0 cm for both mixtures. That is, Mixtures 11a and 12a are mixtures on which heavy equipment can run and which can be sufficiently compacted by rolling compaction. In addition, the flexural strengths of the cured products of the both mixtures were high at 2.0 N/mm$^2$, indicating excellent properties.

As described above, even in a mixture with a high additive content in which a total of 20.0 parts by mass of cement and asphalt emulsion are incorporated with 80 parts by mass of aggregate, it is possible to obtain a mixture with the same constructability as when using aggregate with a moisture content matching the target moisture content, by adding a water-absorbing material and thereby adjusting the apparent moisture content of the aggregate used to match the target moisture content.

The recycling construction method for a pavement layer according to the present invention is useful regardless of the composition of the target mixture. However, it is particularly useful when constructing a recycled pavement layer using a mixture with a design proportion that has a relatively high cement and asphalt emulsion content relative to aggregate, because in such cases the moisture content of the recycled aggregate often exceeds the target moisture content. Examples of a mixture with a design proportion that has a relatively high cement and asphalt emulsion content include a mixture in which the total mass of cement and residue by evaporation of asphalt emulsion exceeds 10% by mass of the total mass of dry solids contained in the mixture. In such mixtures, it is preferable that an asphalt emulsion and cement are contained in such proportions that the ratio of the mass of the residue by evaporation of the asphalt emulsion to the mass of the cement is 0.7 or more but 1.2 or less.

As described above, the recycled pavement layer constructed by mixing a water-absorbing material is a pavement layer characterized in that it contains a recycled aggregate and a water-absorbing material. It is further characterized in that it contains asphalt and a cured product of cement. Accordingly, the recycled pavement layer obtained by carrying out the recycling construction method for a pavement layer according to the present invention is a recycled pavement layer containing a recycled aggregate and a water-absorbing material, and is usually a recycled pavement layer further containing an asphalt and a cured product of cement.

Furthermore, as described above, improving the moisture-content-dependent properties of the aggregate by mixing a water-absorbing material and adjusting the apparent moisture content of the aggregate to match the target moisture content is clearly highly effective not only in recycling construction methods for a pavement layer but also in other cases where the moisture content of the aggregate used affects the properties of the mixture obtained by mixing the aggregate with other additives or its cured product. Therefore, the above-described method is also a method for improving the moisture-content-dependent properties of aggregates or the properties of aggregate containing mixtures that depend on the moisture content of the aggregate, by mixing a water-absorbing material with the aggregate such that the apparent moisture content of the aggregate, which is calculated by excluding the mass of water absorbed by the water-absorbing material, is reduced. This applies not only to recycled aggregates.

**Industrial Applicability**

As described above, according to the recycling construction method for a pavement layer of the present invention, even when the existing pavement that will be a target of construction contains a relatively large amount of moisture, it is possible to construct a recycled pavement layer with good constructability, by adding a water-absorbing material such that the apparent moisture content is reduced. Therefore, the pavement layer can be promptly reconstructed as planned without waiting for natural evaporation of moisture or replacing the base course material or crushed materials from the existing pavement. The industrial applicability of the present invention is extremely high.

**Claims**

1. A recycling construction method for a pavement layer in which a part of an existing pavement is used as a recycled aggregate, the method comprising a step of adding a water-absorbing material to the recycled aggregate such that an apparent moisture content of the recycled aggregate matches a target moisture content, when a moisture content of the recycled aggregate exceeds the target moisture content, wherein the apparent moisture content is obtained by excluding the mass of moisture absorbed by the water-absorbing material from the mass of moisture contained in the recycled aggregate.

2. The recycling construction method for a pavement layer according to claim 1, wherein the method further comprises a step of rolling compaction.

3. The recycling construction method for a pavement layer according to claim 1 or 2, wherein the water-absorbing material is a water-absorbing inorganic granular material and/or a water-absorbing organic material.

4. The recycling construction method for a pavement layer according to claim 3, wherein the water-absorbing inorganic granular material is one or more granular materials selected from porous ceramics such as calcined diatomaceous earth ceramics, zeolite, mesalite, perlite, lightweight foam glass material, and calcined fly ash.

5. The recycling construction method for a pavement layer according to claim 3, wherein the water-absorbing organic material is one or more selected from polyacrylate-based, polysulfonate-based, maleic anhydride-based, polyacrylamide-based, polyvinyl alcohol-based, polyethylene oxide-based, or polyamine-based synthetic polymers, and polyaspartate-based, polyglutamate-based, polyalginate-based, starch-based, cellulose-based, or polyglycol-based natural polymers.

6. The recycling construction method for a pavement layer according to claim 1 or 2, wherein the pavement layer to be recycled is surface course, binder course, or base course.

7.  A recycled pavement layer comprising a recycled aggregate and a water-absorbing material.

8.  The recycled pavement layer according to claim 7, wherein the water-absorbing material is:

    one or more inorganic granular material selected from porous ceramics such as calcined diatomaceous earth ceramics, zeolite, mesalite, perlite, lightweight foam glass material, and calcined fly ash;
    one or more organic material selected from polyacrylate-based, polysulfonate-based, maleic anhydride-based, polyacrylamide-based, polyvinyl alcohol-based, polyethylene oxide-based, or polyamine-based synthetic polymers, and polyaspartate-based, polyglutamate-based, polyalginate-based, starch-based, cellulose-based, or polyglycol-based natural polymers; or
    both of the inorganic granular material and the organic materials.

9.  A method for improving a moisture-content-dependent property of an aggregate, comprising mixing an aggregate and a water-absorbing material such that an apparent moisture content of the aggregate is reduced, wherein the apparent moisture content is obtained by excluding the mass of moisture absorbed by the water-absorbing material.

10. The method according to claim 9, wherein the water-absorbing material is:

    one or more inorganic granular material selected from porous ceramics such as calcined diatomaceous earth ceramics, zeolite, mesalite, perlite, lightweight foam glass material, and calcined fly ash;
    one or more organic material selected from polyacrylate-based, polysulfonate-based, maleic anhydride-based, polyacrylamide-based, polyvinyl alcohol-based, polyethylene oxide-based, or polyamine-based synthetic polymers, and polyaspartate-based, polyglutamate-based, polyalginate-based, starch-based, cellulose-based, or polyglycol-based natural polymers; or
    both of the inorganic granular material and the organic materials.

## INTERNATIONAL SEARCH REPORT

| International application No. |
|---|
| **PCT/JP2023/042561** |

### A.   CLASSIFICATION OF SUBJECT MATTER

***E01C 23/00***(2006.01)i; ***E01C 19/10***(2006.01)i
FI:   E01C23/00 A; E01C19/10 A

According to International Patent Classification (IPC) or to both national classification and IPC

### B.   FIELDS SEARCHED

Minimum documentation searched (classification system followed by classification symbols)

E01C23/00; E01C19/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| X | JP 2012-207521 A (MAEDA ROAD CONSTRUCTION CO., LTD.) 25 October 2012 (2012-10-25)<br>    paragraphs [0007], [0015]-[0023] | 7-10 |
| A | | 1-6 |
| A | JP 10-316460 A (OHBAYASHI CORP.) 02 December 1998 (1998-12-02) | 1-10 |
| A | JP 2017-149611 A (NAGAOKA READY-MIX CONCRETE) 31 August 2017 (2017-08-31) | 1-10 |
| A | JP 9-255386 A (CHICHIBU ONODA CEMENT CORP.) 30 September 1997 (1997-09-30) | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 January 2024** | **06 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2023/042561**

| Patent document cited in search report | | | Publication date (day/month/year) | Patent family member(s) | | | Publication date (day/month/year) |
|---|---|---|---|---|---|---|---|
| JP | 2012-207521 | A | 25 October 2012 | JP | 2012-207520 | A | |
| JP | 10-316460 | A | 02 December 1998 | (Family: none) | | | |
| JP | 2017-149611 | A | 31 August 2017 | (Family: none) | | | |
| JP | 9-255386 | A | 30 September 1997 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000314105 A

- JP 2002069922 A

**Non-patent literature cited in the description**

- ROJO SAISEI SEMENTO ASUFARUTONYUZAI ANTEISHORI HAIGOUSEKKEI NO TEBIKI. Guidelines for Mixture Design of In-Place Recycling with Cement-Asphalt Emulsion Stabilization. Japan Emulsified Asphalt Association, 2003, 1-4

- TENASTU CONCRETE HOSOU GIJUTSU SHISHIN (AN). Draft Technical Guidelines for Roller-Compacted Concrete Pavement. Japan Road Association, October 1990, 76-77
- HOSOUCHOUSA SHIKENHOU BINRAN. Pavement Survey and Test Method Handbook. Japan Road Association, March 2019, vol. 2, 11-13